**Europäisches Patentamt**

**European Patent Office**

**Office européen des brevets**

(11) Veröffentlichungsnummer: **0 175 203**
**A1**

## (12) EUROPÄISCHE PATENTANMELDUNG

(21) Anmeldenummer: **85111075.9**

(22) Anmeldetag: **03.09.85**

(51) Int. Cl.⁴: **A 01 G 9/16**, A 01 G 9/20

(30) Priorität: **04.09.84 DE 8426027 U**

(43) Veröffentlichungstag der Anmeldung: **26.03.86**
**Patentblatt 86/13**

(84) Benannte Vertragsstaaten: **AT BE CH DE FR GB IT LI LU NL SE**

(71) Anmelder: **Erich Schumm GmbH, Erich-Schumm-Strasse 2-4, D-7157 Murrhardt (DE)**

(72) Erfinder: **Kleemann, Karl-Friedrich, Bromersberg 2, D-7157 Murrhardt/Württ. (DE)**

(74) Vertreter: **Patentanwälte Ruff und Beier, Neckarstrasse 50, D-7000 Stuttgart 1 (DE)**

(54) **Frühbeet-Gehäuse.**

(57) Ein Frühbeet-Gehäuse ist im wesentlichen aus Profilstäben und Wandungs-Platten (28) zusammengesetzt, die mit randseitig angeformten Steckgliedern (25) in Schiebeführungen (19) der Profilstäbe eingesetzt sind.

Das Frühbeet-Gehäuse kann als Kasten oder Gewächshaus zusammengesetzt werden, mit einzelnen Wandungen als aufstellbare Klapp-Wandungen.

PATENTANWÄLTE **RUFF** UND **BEIER** STUTTGART

Dipl.-Chem. Dr. Ruff
Dipl.-Ing. J. Beier
Dipl.-Phys. Schöndorf

-1-

Neckarstraße 50
D-7000 Stuttgart 1
Tel.: (0711) 22 70 51*
Telex 07-23412 erub d

A 22 171                                         26. August 1985 JB/khe

Anmelderin:     Erich Schumm GmbH
                Erich-Schumm-Straße 2-4

                7157 Murrhardt/ Württ.

### Frühbeet-Gehäuse

Die Erfindung betrifft ein Frühbeet-Gehäuse mit über Eck
aneinander schließenden Wandungen.

Der Erfindung liegt die Aufgabe zugrunde, ein Frühbeet-
Gehäuse, wie einen Kasten oder ein Gewächshaus zu schaffen, welches auf einfache Weise ermöglicht, jederzeit
aufgeschlagen und auch wieder abgeschlagen zu werden und
das auch hinsichtlich seiner Größe erweitert bzw. verkleinert werden kann.

Zur Lösung dieser Aufgabe ist ein Frühbeet-Gehäuse der
eingangs genannten Art erfindungsgemäß gekennzeichnet
durch für benachbarte Kasten-Wandungen vorgesehene Profilstäbe, welche an ihren Außenseiten jeweils mindestens
zwei an unterschiedlichen Seiten in ihrer Längsrichtung
liegende, hinterschnittene, nutartige Schiebeführungen
für den formschlüssigen Eingriff von Schiebe-Steckgliedern an den zugehörigen Randzonen von Wandungen aufweisen.

Nach einem weiteren Merkmal der Erfindung sind die
Schiebeführungen im Querschnitt im wesentlichen symmetrisch zu der zum Nutgrund rechtwinkligen Mittelebene
ausgebildet, so daß die Profilstäbe auf Umschlag gleich
gut verwendet werden können. Zweckmäßig sind die Steckglieder im Querschnitt nur an einer Seite an das Formschlußprofil der Schiebeführung angepaßt und gehen sie
an der anderen Seite vorzugsweise etwa in der Mittelebene liegend in die zugehörige Außenfläche der Wandung
über, so daß einerseits eine möglichst geringe Schwächung der Wandung im Übergangsbereich zu den Steckgliedern erzielt wird und sich andererseits an einer Außenseite eine durchgehend glatte Oberfläche ergibt. Bei
einer besonders vorteilhaften Ausführungsform liegt das
Steckglied im wesentlichen vollständig zwischen den Ebenen der Außenflächen der, insbesondere durch eine, vorzugsweise thermoplastische Hohlkammer-Platte gebildeten
Wandung und ist es vorzugsweise durch eine plastische
Einprägung an mindestens einer Außenfläche des Wandungsrandes gebildet. Dadurch kann das Steckglied in einfacher Weise vollständig einteilig mit der Wandung ausgebildet werden, wobei es trotzdem eine hohe Festigkeit
aufweist und rechtwinklig zur Wandungsebene über die
Wandung nicht vorsteht. Durch die plastische Einprägung
werden die zur Herstellung der Steckglieder erforderlichen Vertiefungen nicht materialabhebend, sondern materialverdichtend hergestellt, so daß im Bereich der zu
Querschnittsschwächungen führenden Einprägungen eine
Erhöhung der Festigkeit erzielt wird.

Eine besonders vorteilhafte Weiterbildung des Erfindungsgegenstandes besteht darin, daß an dem Profilstab
drei oder mehr, vorzugsweise in rechten Winkeln zueinander stehende Schiebführungen vorgesehen sind, so daß der Profilstab außer als Eckpfosten auch als Zwischenpfosten
einer durchgehenden, aus mehreren aneinander gereihten
Wandungsteilen bestehende Außenwandung zwischen zwei
aneinanderschließenden Wandungen geeignet ist. Bei vier
Schiebeführungen kann der Profilstab im Bereich der
Kreuzungsstelle von vier Wandungen verwendet werden, die
im rechten Winkel bzw. in Winkeln zueinander stehen, in
welchen die Schiebeführungen an dem jeweiligen Profilstab vorgesehen sind.

Zur Erzielung einer leichten Bauweise sind die, insbesondere schwalbenschwanzförmigen Schiebeführungen im
Querschnitt durch Profilstege begrenzt, vorzugsweise
durch einen annähernd H-förmigen oder rechtwinklig rohrförmigen Profilabschnitt mit jeweils zwei quer abstehenden Profilstegen an den Außenseiten der H-Schenkel bzw.
der Rechteckseiten gebildet. Demgegenüber sind dann die
Steckglieder zweckmäßig in der Form jeweils eines Halbschwalbenschwanzes vorgesehen.

Insbesondere, wenn der als Pfosten ausgebildete Profilstab durch ein Stegprofil gebildet ist, ist er bei ausreichender Länge auch dafür geeignet, als Bodenanker ins
Erdreich versenkt zu werden und dadurch das Frühbeet-
Gehäuse sicher ortsfest zu verankern. Zu diesem Zweck
ist beispielsweise der jeweilige Eckpfosten gegenüber
der Wandungshöhe länger und vorzugsweise am unteren Ende
nach Art eines Bodenankers, Herings o.dgl. ausgebildet,
was beispielsweise durch Anspitzung des unteren Endes
des Eckpfostens erzielt werden kann. Bei Ausbildung mit
einem rohrförmigen Profilabschnitt kann der Profilstab
einen Verankerungsstab aufnehmen.

Das erfindungsgemäße Frühbeet-Gehäuse ist ferner gekennzeichnet durch gelenkig und/oder verschiebbar und/oder
quer zur Gelenkachse voneinander lösbar ineinandergreifende Gelenkstäbe, wie Halbscharnierprofil-Paare mit
Befestigungsnuten einerseits für den oberen Rand einer
Wandung und andererseits für den zugehörigen Rand einer
Deckelwandung, wobei die Gelenkabschnitte der Halbscharnierprofile vorzugsweise annähernd winkelförmig mit
einem für den Gelenkeingriff vorgesehenen freien Winkelschenkel sind, der benachbart zur Winkelecke einwärts
stumpfwinklig und an der freien Randzone einwärts etwa
rechtwinklig abgewinkelt ist. Dadurch kann mindestens
eine Klapp-Wandung, wie eine Dach- bzw. Deckelwandung,
die aus demselben Halbfabrikat wie die aufrechten Wandungen, also beispielsweise aus Hohlkammer-Platten hergestellt sein kann, lediglich durch Aufsetzen der Halbscharnierprofile in einfacher Weise gelenkig, d.h. so
angeordnet werden, daß sie an einem oder zwei Rändern
von den Oberseiten der aufrechten Wandungen abgehoben
werden kann und Belüftungsschlitze freigibt. Des weiteren können diese Deckelwandungen statt dessen oder
gleichzeitig parallel zu ihren Ebenen quer verschoben
werden, so daß ganze Dachfelder des Frühbeet-Gehäuses
geöffnet werden können. Schließlich ist es durch die
erfindungsgemäße Ausbildung möglich, ganze Deckelwandungen vollständig abzunehmen. Dadurch ergibt sich der Vorteil, daß je nach Erfordernis das Klima im Frühbeet-
Gehäuse in verschiedenster Weise verändert werden kann.

Damit die jeweilige Klapp-Wandung in der abgehobenen
Stellung auf einfache Weise sicher gehalten werden kann,
sind Stützen mit Formschlußgliedern für den lösbaren
Eingriff in die abgehobenen Wandungsteile vorgesehen,
wobei vorzugsweise mindestens ein Wandungsrand bzw. das

A 22 171      - 5 -      0175203

an diesem angebrachte Profil höhenverstellbar in die
Stütze eingreift, so daß der jeweilige Belüftungsschlitz
stufenlos oder in Stufen unterschiedlich groß gewählt
werden kann.

Bei einer sehr einfachen Ausführungsform weist die
Stütze am oberen Ende ein hakenförmiges Formabschlußprofil mit einem darunterliegenden Auflageschenkel für den
zugehörigen Wandungsrand und darunter mindestens ein zur
selben Seite wie das obere Formschlußprofil liegendes,
einen nach unten gerichteten Standsteg für den zugehörigen Wandungsrand aufweisendes, weiteres Formschlußprofil
auf. Dadurch ist auch unter Windeinwirkung ein verhältnismäßig sicherer Halt der Deckelwandung in der abgehobenen Stellung gewährleistet.

Eine sehr einfache Lagerung mindestens einer Klapp-Wandung ist gemäß der Erfindung auch dadurch zu erzielen,
daß in der Gelenkachse an dem zugehörigen Gelenk-Profilstab endseitige Lagerzapfen vorgesehen sind, die in Lagerwangen eingreifen, welche in Schiebeführungen von im
Winkel zum Gelenk-Profilstab angeordneten Profilstäben
befestigt sind. Der Gelenk-Profilstab sowie die die Lagerwangen tragenden Profilstäbe können dabei genau dasselbe Profil aufweisen, wobei im einen Fall die Schiebeführung zur Aufnahme des zugehörigen Randes der Klapp-
Wandung dient und im anderen Fall die Lagerwangen jeweils in einer Schiebeführung, beispielsweise durch Verschraubung, befestigt sind; zur Aufnahme des Schrauben-
Gewindeschaftes kann in die hinterschnittene Schiebeführung ein dieser im Querschnitt entsprechender Nutenstein
mit einem Gewindeloch eingesetzt sein.

A 22 171 — 6 — 0175203

Eine wesentliche Weiterbildung des Erfindungsgegenstandes besteht auch darin, daß Profilstäbe hinterschnittene, insbesondere T-nutförmige Nutprofile für die Aufnahme von Schraubenköpfen, vorzugsweise an ihren Innenseiten, aufweisen und daß insbesondere die Nutprofile jeweils zwischen zwei Schiebeführungen liegen. Dadurch ist es möglich, sowohl Einrichtungskörper, beispielsweise Tragborde, Blumenkästen, Tragarme u.dgl. an den Innenseiten der Gehäuse-Wandungen in beliebiger Höhe oder hängend zu befestigen als auch benachbarte, im Winkel aneinander schließende Gehäuse-Wandungen, beispielsweise unter Zuhilfenahme von abgewinkelten oder ähnlichen Verbindungsstücken, durch Verschraubung aneinander zu befestigen.

Nach einem weiteren Vorschlag gemäß der Erfindung sind als Eckprofile bzw. als Eckpfosten vorgesehene Profilstäbe aus zwei, insbesondere auf Gehrung, mit Anschlußkanten aneinanderschließenden Einzel-Profilstäben zusammengesetzt, die vorzugsweise über einen in ihrer einspringenden Ecke liegenden, beispielsweise winkelförmigen und verschraubten Verbindungsstab o.dgl. lösbar miteinander verbunden sind, wobei insbesondere jeder Einzel-Profilstab zwischen seiner Schiebeführung und seiner Anschlußkante ein hinterschnittenes Nutprofil für die verschiebbare formschlüssige Aufnahme von Schraubenköpfen aufweist. Dadurch können ganze, aus mehreren nebeneinander angeordneten Teilstücken zusammengesetzte Gehäuse-Wandungen zunächst auf dem Boden liegend zusammengesetzt und dann am Standort des Gehäuses in einfacher Weise durch Aufrichten aufgestellt und mit im Winkel zu ihnen liegenden Gehäuse-Wandungen durch Verschrauben der Einzel-Profilstäbe zusammengefügt werden. Das erfindungsgemäße Gehäuse eignet sich insbesondere auch für die Ausbildung als aus Wandungs-, Profil- und
Verbindungs-Teilen im nicht zusammengebauten Zustand
bestehender Bausatz, der in einfacher Weise vom Benutzer
selbst zum Gehäuse zusammengesetzt werden kann.

Sowohl zur Montage wie auch zur Erzielung weiterer Funktionen kann es günstig sein, wenn mindestens ein Profilstab eine hinterschneidungsfrei in die zugehörige Wandungs-Randzone eingreifende, insbesondere hinterschneidungsfrei, beispielsweise rechteckig ausgebildete Stecknut aufweist, so daß beispielsweise Dachteile parallel
zu den Wandungen, jedoch rechtwinklig zur zugehörigen
Wandungskante von oben nach unten auf eine aufrechte
Wandung aufgesetzt werden können. Auch können diese
Stecknuten als in Längsrichtung des zugehörigen Profilstabes liegende Gleitführungen für Schiebefenster, rolladenartig verschließbare Gehäuse-Öffnungen o.dgl. verwendet werden. Je nach Verwendung liegt die Stecknut in
einer gemeinsamen Ebene mit oder im Winkel zu der Schiebeführung des zugehörigen Profilstabes.

Das erfindungdgemäße Frühbeet-Gehäuse kann sowohl als
relativ niedriger, nur von außen bedienbarer Frühbeet-
Kasten als auch als Gewächshaus o.dgl. ausgebildet sein,
das wenigstens annähernd Stehhöhe aufweist und dessen
Innenraum begehbar ist. Dabei ist es denkbar, das Gehäuse annähernd über seine ganze Höhe walmdachförmig auszubilden oder als Spitzgiebeldach vorzusehen. Im ersten
Fall eignet sich das Gehäuse insbesondere dafür, mit
seiner über die Höhe durchgehend ebenen Rückseite an
einer Gebäudewand, einer Mauer o.dgl. anliegend angeordnet zu werden, wobei in diesem Fall das Gehäuse an der
Rückseite keine eigene Wandung benötigt, sondern diese
Rückseite offen und nach dem Aufstellen des Gehäuses durch die Anschlußwand verschlossen ist. Zwei derartige
Gehäuse können aber auch Rücken an Rücken aufgestellt
und miteinander verbunden werden, wodurch auf einfache
Weise ein freistehendes Gewächshaus geschaffen ist. Soll
mindestens eine Klapp-Wandung nicht als türartiger Zugang zum Gewächshaus dienen, so ist es vorteilhaft, wenn
mindestens eine Wandung, insbesondere eine Giebel-Wandung des Gehäuses als Tür einen in benachbarten Profilstäben geführten Rolladen aufweist, dessen Rolladenkasten an der Oberseite der Türöffnung beispielsweise
zwischen zwei benachbarten, die Türöffnung begrenzenden
und die Gleitführungen für den Rolladenzug bildenden
Profilstäben angeordnet ist.

Diese und weitere Merkmale von bevorzugten Weiterbildungen der Erfindung gehen auch aus der Beschreibung und
den Zeichnungen hervor, wobei die einzelnen Merkmale
jeweils für sich allein oder zu mehreren in Form von
Unterkombinationen bei einer Ausführungsform der Erfindung und auf anderen Gebieten verwirklicht sein können.
Ausführungsbeispiele der Erfindung sind in den Zeichnungen dargestellt und werden im folgenden näher erläutert.
Es sind dargestellt in:

    Fig. 1   ein erfindungsgemäßes Frühbeet-Gehäuse
           in Draufsicht;

    Fig. 2   das Frühbeet-Gehäuse gemäß Fig. 1 in
           Ansicht auf die Rückseite;

A 22 171 — 9 — 0175203

Fig. 3   das Frühbeet-Gehäuse gemäß Fig. 2 in
         Seitenansicht von rechts;

Fig. 4   ein Ausschnitt der Fig. 3 in vergrößerter Darstellung;

Fig. 5   eine Draufsicht auf den Ausschnitt
         gemäß Fig. 4;

Fig. 6   ein Eckpfosten gemäß Fig. 5 in vergrößerter geschnittener Darstellung;

Fig. 7   ein Ausschnitt einer Wandung in Ansicht auf
         die das Steckglied bildende Wandungskante;

Fig. 8   ein Ausschnitt der Fig. 4, jedoch bei abgehobener bzw. hochgestellter Deckelwandung;

Fig. 9   ein weiteres Ausführungsbeispiel für ein
         als freistehendes Gewächshaus ausgebildetes
         Frühbeet-Gehäuse in perspektivischer Darstellung;

Fig. 10  ein weiteres Ausführungsbeispiel eines Gewächshauses für die Anordnung an einer Wand
         in perspektivischer Darstellung;

Fig. 11  eine weitere Ausführungsform eines Profilstabes in Längsansicht;

Fig. 12  ein Ausführungsbeispiel für zwei ineinan-
         dergreifende Gelenk-Profilstäbe in Längs-
         ansicht;

A 22 171  - 10 -  0175203

Fig. 13 ein Ausführungsbeispiel für einen Abschluß-
Profilstab in Längsansicht;

Fig. 14 weitere Ausführungsformen von Profilstäben
bis  18 im Querschnitt;

Fig. 19 die gelenkige Lagerung einer Klapp-Wandung
in einer ausschnittsweisen Darstellung;

Fig. 20 eine Eckverbindung eines Gehäuses im Ausschnitt;

Fig. 21 ein weiteres Ausführungsbeispiel einer
Stütze für eine Klapp-Wandung in Seitenansicht.

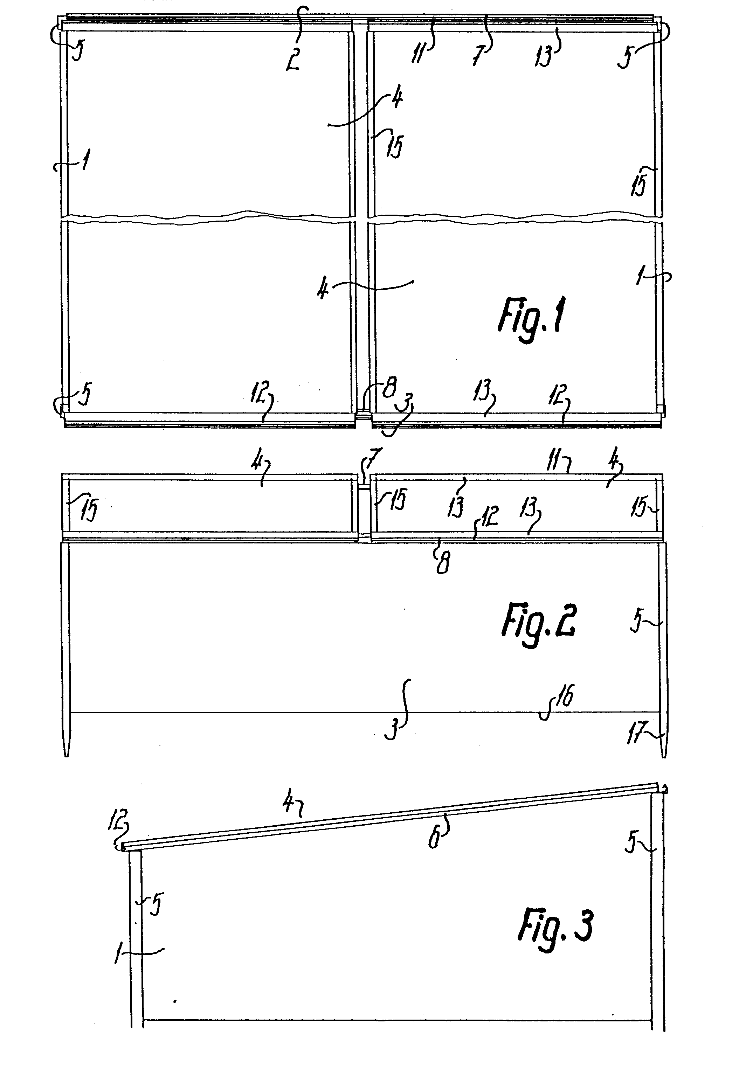

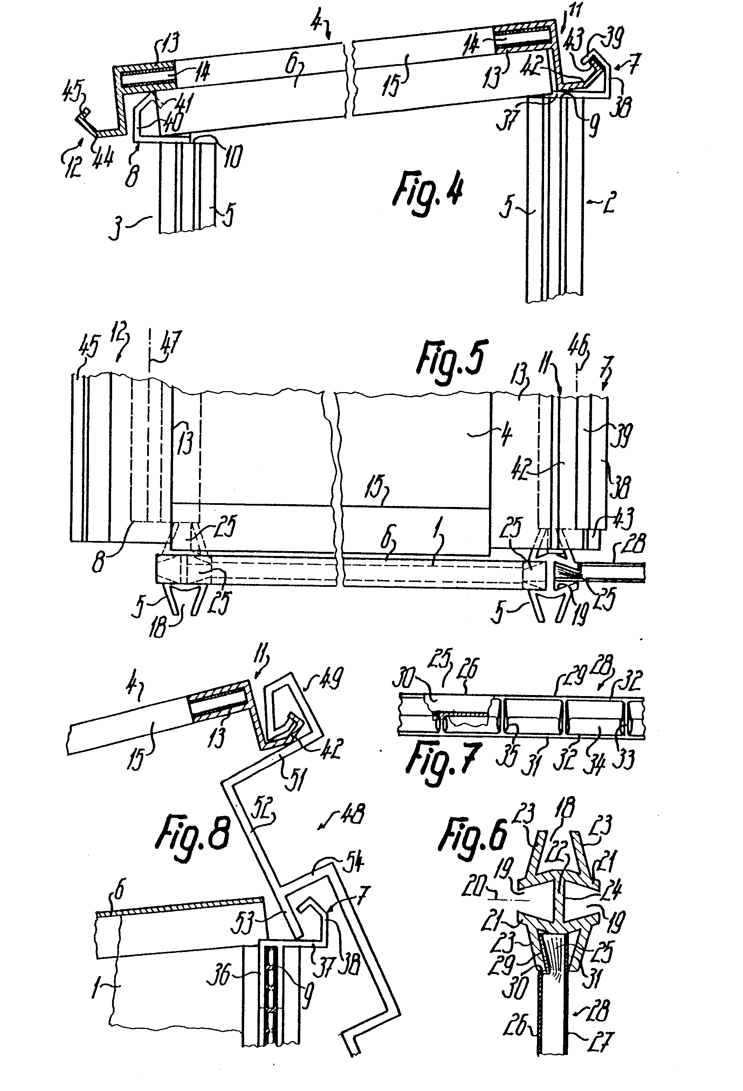

Wie die Fig. 1 bis 3 zeigen, ist ein erfindungsgemäßes,
aus Baukastenelementen einfach zusammensetzbares und
auch wieder zerlegbares Frühbeet-Gehäuse im wesentlichen
durch aufrechte, im rechten Winkel zueinanderstehende
Außen-Wandungen 1 bis 3 und mindestens eine, im dargestellten Ausführungsbeispiel zwei nebeneinanderliegende,
gleich große Klapp-Wandungen 4 in Form von Deckelwandungen gebildet, welche mit einer vorbestimmten Dachschräge
zu einer Querkante, im dargestellten Ausführungsbeispiel
zur Außen-Wandung 2 ansteigen. Die Außen-Wandungen 1 bis
3 stoßen an den Ecken des Kastens im rechten Winkel aneinander an und sind in diesen Eckbereichen durch als
Eckpfosten vorgesehene Profilstäbe 5 formschlüssig jedoch lösbar miteinander verbunden. Die aus Plattenzuschnitten bestehenden Außen-Wandungen 1 bis 3 sind an
ihren oberen Längskanten mit über ihre Länge reichenden
Kantenprofilen versehen, welche aufgesteckt sind und
dadurch die zugehörige Kante des jeweiligen Plattenzuschnittes über deren Länge vollständig abdecken. Die
Profile können in einfacher Weise wie die Wandungen aus
Kunststoff oder Aluminium bestehen. Im Falle der seitlichen Wandungen 1 sind die oberen Kanten lediglich mit
einfachen U-Profilen 6 abgedeckt, die so auf in der
Dicke reduzierte Randabschnitte dieser Wandungen 1 aufgesetzt sind, daß die Außenflächen der Schenkel des Profiles 6 in den Ebenen der Außenseiten der Wandplatte
liegen. Die Reduzierung auf diese Dicke kann in einfacher Weise dadurch erfolgen, daß der aus thermoplastischem Kunststoff bestehende Plattenzuschnitt unter Hitze
und Druck auf die erwünschte geringere Dicke bei plastischer Verformung zusammengepreßt wird. Im Falle der vorderen und der hinteren Wandung 2 bzw. 3 des Kastens sind
die oberen Kanten der Plattenzuschnitte jeweils mit
einem Gelenkprofil 7 bzw. 8 in Form eines Halbscharnierprofiles abgedeckt, das gemäß Fig. 4 einen im Querschnitt U-förmigen Profilabschnitt aufweist, welcher auf
den zugehörigen, in der beschriebenen Weise in der Dicke
reduzierten Rand 9 bzw. 10 der zugehörigen Wandung 2
bzw. 3 über dessen Länge reichend aufgesteckt ist. Jedem
Gelenkprofil 7 bzw. 8 ist zur Herstellung einer Halbscharnierprofil-Paarung ein weiteres Gelenkprofil 11
bzw. 12 zugeordnet, das mit einem U-förmigen Profilabschnitt 13 auf den zugehörigen, in der beschriebenen
Weise in der Dicke reduzierten Rand 14 der jeweiligen
Deckel-Wandung 4 aufgesteckt ist. Beide seitlichen Ränder jeder Deckel-Wandung 4 sind mit über ihre Länge reichenden, aufgesteckten Profilen 15 abgedeckt, die im
wesentlichen gleich wie die Profile 6 ausgebildet und
auf in der Dicke reduzierten Randstreifen angebracht
sind. Die Profilstäbe 5 sind gegenüber der Höhe der jeweils zugehörigen Wandung 2 bzw. 3 derart höher, daß sie über deren untere, horizontale Kanten 16 mit unteren
Enden 17 vorstehen, wobei diese unteren Enden 17 als
Bodenanker, Hering o.dgl. ausgebildet sind.

Wie die Fig. 4 bis 8 weiter zeigen, ist jeder Profilstab 5 durch einen Profilabschnitt gebildet, der an vier
Längsseiten vier im rechten Winkel zueinander stehende
und wenigstens über die Höhe der jeweils zugehörigen
Wandung durchgehende nutförmige Schiebeführungen 18, 19
aufweist. Alle Schiebeführungen 18, 19 sind im Querschnitt im wesentlichen gleich ausgebildet, zentrisch
symmetrisch um eine Mittelachse angeordnet und liegen
derart, daß jeweils zwei Schiebeführungen 18 bzw. 19
symmetrisch zu einer gemeinsamen Mittelebene 20 vorgesehen sind. Der Profilstab 5 ist im wesentlichen durch ein
H-Profil gebildet, dessen H-Schenkel 21 im Querschnitt
zu ihren freien Enden spitzwinklig konvergieren und dadurch auf jeder Seite des H-Quersteges 22 eine Schiebeführung 19 bilden. An der Außenseite jedes der vier H-
Schenkel 21 ist ein nach außen stehender Profilsteg 23
vorgesehen, wobei die beiden jeweils auf einer Seite des
H-Profiles liegenden Profilstege 23 zu ihren freien Enden unter gleichen Winkeln wie die H-Schenkel 21 konvergieren und dadurch jeweils eine Schiebeführung 18 bilden. Die beiden Schiebeführungen 18 liegen symmetrisch
zur Mittelebene des H-Quersteges 22. Im dargestellten
Ausführungsbeispiel sind die Schiebeführungen 18, 19 im
Querschnitt symmetrisch schalbenschwanzförmig mit gegenüber der Nuttiefe etwa gleich großer maximaler Nutbreite
und jeweils mit einem Nutgrund 24, der im wesentlichen
rechtwinklig zur zugehörigen Mittelebene 20 liegt.

Die Schiebeführungen 18, 19 sind jeweils zur Profilabdeckung der zugehörigen seitlichen Randzone einer Wandung 1 bzw. 2 bzw. 3 geeignet. Gleichzeitig sind die
Schiebeführungen dafür vorgesehen, diese Randzonen formschlüssig mit nur einem einzigen Freiheitsgrad, nämlich
parallel zum Profilstab zu halten. Zu diesem Zweck sind
diese Randzonen als Schiebe-Steckglieder 25 ausgebildet,
die nach Art von Halbschwalbenschwanz-Profilen geformt
sind. Die Steckglieder 25 ragen über die Ebenen der Außenflächen 26, 27 der jeweils zugehörigen Wandungs-Platte 28 nicht vor, sondern reichen maximal gerade bis an
diese Ebenen. Sie sind dadurch hergestellt, daß der zugehörige Rand der Wandungs-Platte 28 an einer Seite 29
durch plastische Verformung mit einer über seine Länge
durchgehenden Vertiefung versehen ist, welche an der
Randkante geringere Tiefe als im Abstand dazu hat, derart, daß in konstantem Abstand zur Randkante eine zur
Plattenebene annähernd rechtwinklige Schulter 30 gebildet ist, deren Abstand von der zugehörigen Plattenkante
im wesentlichen gleich der Nuttiefe der jeweiligen
Schiebeführung 18 bzw. 19 ist. Im Bereich der Schulter
30 ist die Dicke der Platte 28 gleich der Nutbreite der
Schiebeführung 18 bzw. 19 an der offenen Nutseite. An
der anderen Seite 31 ist das jeweilige Steckglied 25
durch die ebene Fortsetzung der zugehörigen Außenfläche
27 der Platte 28 begrenzt. Wird das Steckglied 25 in
eine Schiebeführung 18 bzw. 19 in deren Längsrichtung
eingesteckt, so liegt es mit seiner vertieften Seite 29
ganzflächig an der Innenseite des zugehörigen H-Schenkels 21 bzw. Profilsteges 23 an, während es mit seiner
freien Kantenfläche am Nutgrund 24 anliegt und die andere Seite 31 im Bereich des freien Endes an der Innenseite des zugehörigen H-Schenkels 21 bzw. des Profilsteges
23 anliegt.

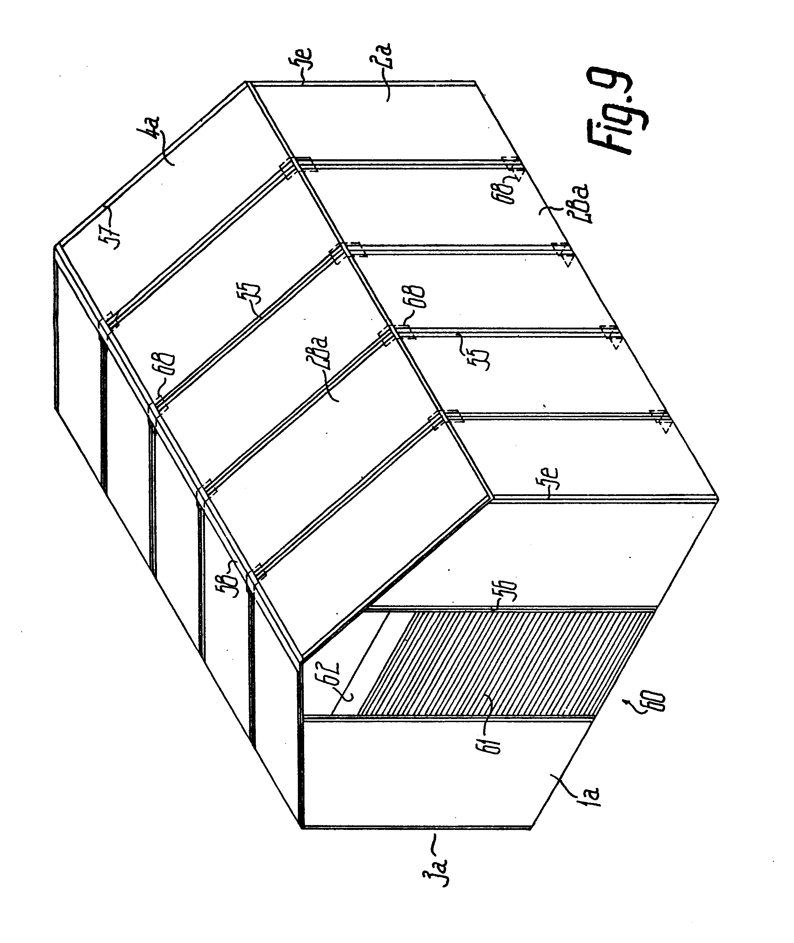

Die Wandungen sind im wesentlichen durch Hohlkammer-
Platten 28 gebildet, wie sie in Fig. 7 in Ansicht auf
eine Kante dargestellt ist. Derartige, von zahlreichen
Hohlräumen durchsetzte, jedoch an den Außenflächen dicht
geschlossene Platten sind beispielsweise durch zwei, die
Außenflächen 26, 27 bildende Außenschichten 32 begrenzt,
welche durch rechtwinklig zu ihnen liegende und zueinander parallel sowie in gleichen Abständen zueinander angeordnete Querstege 33 miteinander verbunden sind, welche einteilig mit den Außenschichten 32 aus thermoplastischem Kunststoff o.dgl. hergestellt sind. Dadurch
sind zwischen den Außenschichten 32 und den Querstegen
33 Hohlkammern 34 gebildet, welche jeweils zwischen den
quer zu den Querstegen 23 liegenden Plattenkanten ununterterbrochen durchgehen. Zur Herstellung des Steckgliedes
25 wird der zugehörige Rand quetschend verformt, derart,
daß die zugehörige Außenschicht 32 gegenüber der übrigen
Außenfläche 26 versenkt wird, wobei die Querstege 33 in
diesem Bereich durch Quetschung in ihrer Höhe reduziert
und dabei, wie bei 35 angedeutet, verdickt werden. Die
im Querschnitt rechtwinkligen Hohlkammern 34 sind beim
dargestellten Ausführungsbeispiel im Querschnitt rechtwinklig zu den Querstegen 33 größer als rechtwinklig zu
den Außenschichten 32, können aber auch quadratische
oder andere Querschnitte aufweisen. Die Steckglieder 25
sind jeweils an einem solchen Rand der Platte 28 vorgesehen, der quer, insbesondere rechtwinklig zur Längsrichtung der Querstege 33 bzw. der Hohlkammern 34 liegt.

Die Halbscharnierprofil-Paare aus den Gelenkstäben 7, 11
bzw. 8, 12 an beiden Enden der jeweiligen Deckelwandung 4 sind beim dargestellten Ausführugsbeispiel gleich
ausgebildet. Wie insbesondere Fig. 8 zeigt, sind auch
die Gelenkstäbe 7, 8 der aufrechten Außen-Wandungen 2, 3 mit U-förmigen Profilabschnitten 36 versehen, welche, wie anhand der Profile 6 und der Profilabschnitte 13 beschrieben, auf in der Dicke reduzierte Randzonen der zugehörigen Plattenzuschnitte aufgesteckt sind. Der U-Quersteg des jeweiligen Profilabschnittes 36 ist über einen Profilschenkel hinaus zu einem Winkelschenkel 37 verlängert, welcher seitlich benachbart zum Profilabschnitt 36 im rechten Winkel in einen freien Winkelschenkel 38 übergeht. Im Abstand zur Winkelecke ist dieser freie Winkelschenkel 38 im stumpfen Winkel einwärts abgewinkelt, wobei die freie Randzone 39 dieses einwärts abgewinkelten Streifens nochmals annähernd im rechten Winkel einwärts abgewinkelt ist und seitlich im Abstand außerhalb der Ebene der zugehörigen Seitenfläche des Profilabschnittes 36 liegt. In gleicher Weise ist der Gelenkstab 8 mit einem freien Winkelschenkel 40 und einer freien Randzone 41, der Gelenkstab 11 mit einem freien Winkelschenkel 42 und einer freien Randzone 43 sowie der Gelenkstab 12 mit einem freien Winkelschenkel 44 und einer freien Randzone 45 versehen, wobei alle Halbscharnierprofile gleiche Profilquerschnitte aufweisen, also durch Abschnitte desselben Profiles gebildet sein können. Einander zugeordnete Gelenkstäbe 7, 11 bzw. 8, 12 können so ineinandergreifen, daß der freie Winkelschenkel 42 bzw. 44 des der Deckelwandung zugeordneten Gelenkstabes 11 bzw. 12 auf dem Winkelschenkel 37 des zugeordneten Gelenkstabes 7 bzw. 8 aufsitzt und dabei mit der Kantenfläche seiner freien Randzone 43 bzw. 45 an der Innenfläche der freien Randzone 39 bzw. 41 anliegt. In dieser Eingriffsstellung sind dann die beiden ineinandergreifenden Gelenkstäbe 7, 11 bzw. 8, 12 gegeneinander um eine zu ihrer Profillängsrichtung parallele Gelenkachse 46 bzw. 47 schwenkbar. Je nachdem um welche Gelenkachse geschwenkt wird, kann die andere Halbscharnierprofil-Paarung quer zur Gelenkachse getrennt werden,
d.h., daß an der Stelle der Trennung die zugehörige
Deckelwandung 4 von der zugehörigen aufrechten Wandung 2
bzw. 3 abgehoben wird. Diese Trennung ist dadurch möglich, daß die Halbscharnierprofile jeder Paarung nur
hakenartig ineinandergreifen. Die erfindungsgemäße Ausbildung der Halbscharnierprofile ermöglicht es des weiteren, jede Deckelwandung 4 parallel zu den Halbscharnierprofilen zu verschieben, da diese gleichzeitig
Gleitschienen bilden. Durch Verschieben der Deckelwandungen bzw. Abdeckung zur Seite ist es zusätzlich noch
möglich, das Frühbeet beregnen zu lassen oder einfach zu
gießen. Es sind also die Funktionen der Höhenverstellbarkeit und der seitlichen Verschiebbarkeit vereint. Der
Abstand zwischen den Gelenkstäben 11, 12 der jeweiligen
Deckelwandung 4 ist größer als der entsprechende Abstand
zwischen den Gelenkstäben 7, 8 der Außenwandungen gewählt, so daß in der Regel nur eine einzige Halbscharnierprofil-Paarung in Eingriff steht, während an der
anderen Seite der Gelenkstab 11 bzw. 12 der Deckelwandung 4 an der Außenseite des zugehörigen Gelenkstabes 7
bzw. 8 liegt. Die Gelenkstäbe 7, 8 sind so ausgebildet,
daß sie nach oben nicht über die Oberkanten der seitlichen Wandungen 1 vorstehen, sondern allenfalls bis an
die Ebenen dieser, durch die Profile 6 gebildeten Oberkanten reichen.

Zur Sicherung der jeweiligen Deckelwandung 4 in der beschriebenen abgehobenen Stellung sind Stützen 48 vorgesehen, die nach dem Abheben formschlüssig eingesetzt
werden können, derart, daß die Deckelwandung 5 in unterschiedlich hoch abgehobenen Stellungen gesichert werden
kann. Jede Stütze 48 ist durch einen Strangprofilabschnitt gebildet und weist am oberen Ende ein Formschlußglied 49 auf, welches, ausgehend von einem liegenden U-Profil, einen mehrfach hakenförmig einwärts abgewinkelten Schenkel 50 aufweist, der dem anderen, als
Auflageschenkel 51 vorgesehenen Profilschenkel mit geringem Abstand gegenüberliegt. Dieses Formschlußglied 49
ist so bemessen, daß es in die Gelenkstäbe 11, 12 formschlüssig eingehängt werden kann, derart, daß der freie
Winkelschenkel 42 bzw. 44 an der Innenseite seiner freien Randzone 43 bzw. 45 berührt wird und gleichzeitig auf
dem Auflageschenkel 51 aufliegt. An seinem Ende geht der
Auflageschenkel 51 des Formschlußgliedes 49 in einen von
diesen wegweisenden und rechtwinklig an den Auflageschenkel 51 anschließenden Stützsteg 52 über, dessen
frei ausragender Endabschnitt als Standsteg 53 vorgesehen ist und gleichzeitig einen Schenkel eines U-förmigen
Formschlußgliedes 54 bildet, das auf derselben Seite des
Stützsteges 52 wie das Formschlußglied 49 liegt und nach
unten offen ist. Mit dem Formschlußglied 54 wird die
Stütze 48 derart mit dem zugehörigen Gelenstab 7 bzw. 8
mit dem Randprofil in Eingriff gebracht, daß der Standsteg 53 auf dem Winkelschenkel 37 aufsteht und der freie
Winkelschenkel 38 bzw. 40 zwischen den Schenkeln des
Formschlußgliedes 54 liegt. Der dem Standsteg 53 gegenüberliegende Schenkel des Formschlußgliedes 54 ist nach
unten verlängert und trägt mindestens ein weiteres Formschlußglied, das gleich wie das Formschlußglied 54 ausgebildet ist, so daß die Stütze 48 stufenweise an unterschiedlichen Höhenabschnitten in Eingriff mit dem Gelenkstab 7 gebracht werden kann. Jeweils die Gelenkstab-Paarung 7, 11 bzw. 8, 12, an welcher keine Stütze
vorgesehen ist, wird zweckmäßigerweise in den genannten
Gelenkeingriff gebracht.

In den Fig. 9 bis 21 sind für einander entsprechende
Teile die gleichen Bezugszeichen wie in den Fig. 1
bis 8, jedoch mit unterschiedlichen Buchstaben-Indizes
verwendet.

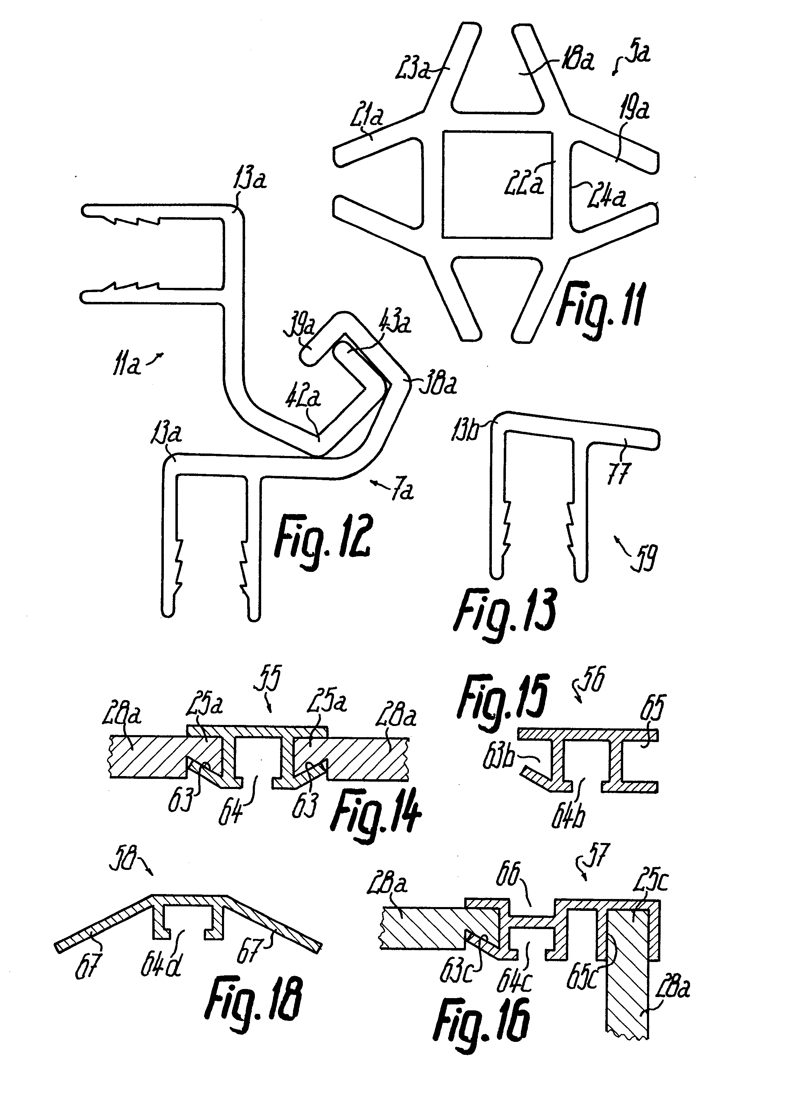

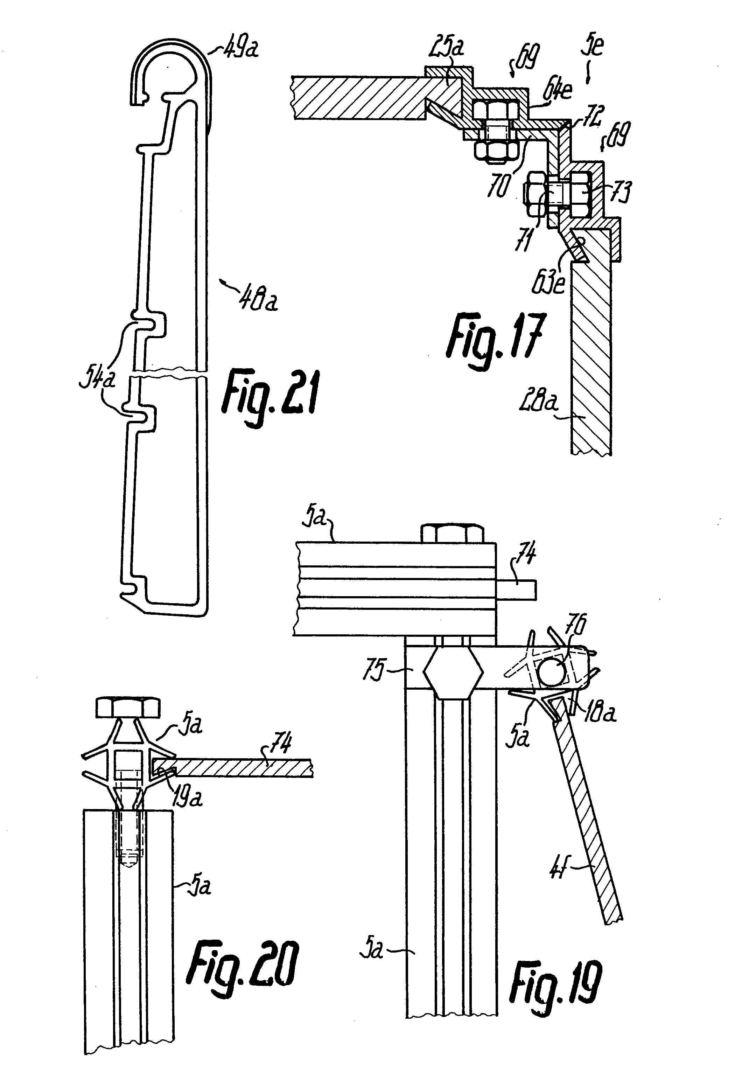

Das Gewächshaus gemäß Fig. 9 weist Wandungen 1a, 2a, 3a
auf, die im wesentlichen durch Wandungs-Platten 28a sowie diese verbindende Profile 5e und 55 bis 58 gebildet
sind. Die Profile 55 gemäß Fig. 14 dienen zur Verbindung
benachbarter aufrechter, in einer gemeinsamen Ebene angeordneter Wandungs-Platten 28a an den vertikalen Wandungen sowie in den beiden, im stumpfen Giebelwinkel
zueinander liegenden Dach-Wandungen 4a. Die Profilstäbe
56 gemäß Fig. 15 dienen zur Anordnung in einer vertikalen Wand, im dargestellten Ausführungsbeispiel einer
Giebel-Wandung 1a und zwar im Bereich einer durch einen
Rolladen 60 verschließbaren Türöffnung, dessen Rolladenzug 61 mit seinen beiden seitlichen Randzonen in gegeneinander gerichteten Nuten der beiden Türzargen-Profilstäbe 56 geführt ist. Der zugehörige, eine nicht näher
dargestellte Rolladenzug-Aufwickelwelle aufnehmende Rolladenkasten 62 ist zwischen den beiden Profilstäben 56
befestigt. Die Profilstäbe 57 gemäß Fig. 16 dienen als
Eckanschlußprofile zur Verbindung der Randzonen der
äußersten Wandungs-Platten 28a mit den oberen Randzonen
der aufrechten Wandungs-Platten der Giebelwände. Der
Profilstab 58 gemäß Fig. 18 dient als Firstprofil und
überdeckt die Firstfuge zwischen den benachbarten Kanten
der Wandungs-Platten 28a der Dach-Wandungen 4a. Die Profilstäbe 5e schließlich, die gemäß Fig. 6 bzw. 11 oder
gemäß Fig. 17 ausgebildet sein können, dienen als vertikale Eckpfosten an den vier Ecken des Gewächshauses. Bevorzugt ist die Ausbildung nach Fig. 11; dadurch können
die Eckpfosten mit ihren unteren Enden erdgleich abschließend angeordnet und als Montagehilfe einfache Erdanker, z.B. aus Draht, verwendet werden. Es ist sogar
möglich, die hinten liegenden Erdanker erst nach der
winkligen und höhenmäßigen Ausrichtung des Frühbeetkasten in die Erde zu stecken.

Der zuletzt genannte Profilstab 5e weist in einem Fall
gemäß Fig. 11 einen zentralen, im Querschnitt annähernd
quadratischen, rohrförmigen Profilabschnitt auf, von
dessen vier Ecken jeweils zwei Profilstege 21a, 23a derart ausgehen, daß an der Außenseite jeder der vier Seiten des rohrförmigen Profilabschnittes 22a eine im Querschnitt schwalbenschwanzförmige Schiebeführung 18a bzw.
19a gebildet ist, in welche die Schiebe-Steckglieder 25a
der Wandungs-Platten 28a passen. In den rohrförmigen
Profilabschnitt kann ein Verankerungsstab eingeführt
werden, der nach unten über die Unterseite des Profilstabes 5a vorsteht und diesen im Erdreich verankert.

Die Profilstäbe 7a, 11a gemäß Fig. 12 weisen derart hakenförmig abgewinkelte und für den gegenseitigen Eingriff geeignete, annähernd U-förmige Profilabschnitte
38a, 42a auf, daß sie, wie anhand den Fig. 4 und 5 beschrieben, gelenkig ineinandergreifen können. Jeder Profilabschnitt 38a bzw. 42a geht mit seinem U-Schenkel
über einen teilkreisförmigen Übergangsabschnitt von
einer seitlichen Verlängerung eines Quersteges desjenigen Profilabschnittes 13a aus, der zum Aufstecken auf
die Wandungs-Platte 28a dient und der im wesentlichen
ebenfalls U-förmig ist. Der seitlich über einen der an
den Innenseiten gezahnt profilierten U-Schenkel hinaus
verlängerte U-Quersteg dieses Profilabschnittes 13a
liegt in einer zur Mittelebene dieses Profilabschnittes
13a rechtwinkligen Ebene, mit welcher wiederum der anschließende U-Schenkel des Profilabschnittes 38a einen
stumpfen, sich an der Außenseite des U-Quersteges erweiternden Winkel einschließt. Dieser zuletzt genannte U-
Schenkel des Profilabschnittes 38a geht wiederum unter
einem ebenfalls stumpfen, sich zur Mittelebene des Profilabschnittes 13a öffnenden Winkel in den zugehörigen
U-Quersteg über, der seinerseits rechtwinklig in den
anderen, hakenartig frei endenden U-Schenkel 39a übergeht. Dadurch können zwei gleiche Profilstäbe 7a, 11a
gemäß Fig. 12 derart ineinandergesetzt werden, daß die
Mittelebenen ihrer Profilabschnitte 13a rechtwinklig
zueinander liegen und hierbei der höher liegende Profilstab 11a unter seinem Eigengewicht formschlüssig gehalten in dem darunter liegenden Profilstab 7a gesichert
ist. Der obere Profilstab 11a kann aus dieser Lage mit
seinem Profilabschnitt 13a nach oben geschwenkt werden.
Gleichzeitig sind die beiden Profilstäbe 7a, 11a in
ihrer Längsrichtung gegeneinander verschiebbar und in
aufgeklapptem Zustand rechtwinklig zur Klappachse voneinander vollständig trennbar.

Der Profilstab 55 gemäß Fig. 14 weist zwei beiderseits
in einer gemeinsamen Ebene liegende und entgegengesetzt
gerichtet offene nutförmige Schiebeführungen 63 auf, die
jedoch nicht voll schwalbenschwanzförmig, sondern so
halbschwalbenschwanzförmig an die Schiebe-Steckglieder
25a angepaßt sind, daß letztere die die Schiebeführungen
63 bildenden Nuten nahezu vollständig ausfüllen. Zwischen diesen Schiebeführungen 63 bildet der Profilstab
55 ein T-nutförmiges Nutprofil 64, dessen Nutseitenwandungen durch die Bodenwandungen der Schiebeführungen 63
gebildet sind. In dieses Nutprofil, das zweckmäßig mit
seiner Nutöffnung zur Innenseite des Gehäuses liegend
angeordnet wird, können die Köpfe von Schrauben formschlüssig haltend eingeführt werden, welche dann an jeder beliebigen Stelle über die Länge des Profilstabes 55
angeordnet werden können. Die äußeren Seitenwandungen
der Schiebeführungen 63 sowie die Bodenwand des Nutprofiles 64 werden durch einen gemeinsamen, ebenen Profilsteg gebildet, der an den durchgehend ebenen Außenseiten
der Wandungs-Platten 28a sowie der Schiebe-Steckglieder
25a anliegt.

Der Profilstab 56 gemäß Fig. 15 unterscheidet sich von
demjenigen nach Fig. 14 im wesentlichen nur dadurch, daß
auf einer Seite statt einer hinterschnittenen Schiebeführung eine im Querschnitt rechteckige Stecknut 65 vorgesehen ist, in welcher der Rolladenzug 61 auf einfache
Weise gleitend geführt werden kann.

Beim Profilstab 57 gemäß Fig. 16 liegt diese Stecknut
65c nicht, wie bei der Ausführungsform gemäß Fig. 15, in
einer gemeinsamen Mittelebene mit der Schiebeführung
63b, sondern im rechten Winkel zu dieser, derart, daß
sie in Form eines U-förmigen Profilabschnittes seitlich
außerhalb des Nutprofiles 64c liegt und die U-Schenkel
dieses Profilabschnittes zu der Seite frei ausragen, an
welcher der schräge Profilschenkel der Schiebeführung
63a liegt. Der die Bodenwand des Nutprofiles 64c bildende Profilsteg ist gegenüber den benachbarten und parallel zu ihm liegenden Profilstegen der Schiebeführung 63a
und der Stecknut 65c nach innen versetzt, so daß eine
Rinne 66 gebildet ist, welche als Regensammelrinne geeignet sein kann. Mit der Stecknut 65c ist der Profilstab 57 von oben auf die oberen schrägen Randzonen 25c
der Wandungs-Platten 28a der jeweiligen Giebel-Wandung
1a aufgesetzt, wobei die Randzone 25c gleiche Dicke wie
die übrige Wandungs-Platte 28a aufweist.

Der Profilstab 58 weist ebenfalls an der Unter- bzw.
Innenseite ein T-nutförmiges Nutprofil 64d auf, dessen
Profil-Quersteg beiderseits in seitlich vorstehende Profilstege 67 verbreitert ist, die in einem dem Dachwinkel
entsprechenden Winkel zueinander liegen und an der Oberseite der zugehörigen Wandungs-Platten 68a aufliegen.
Die genannten Nutprofile 64, 64b, 64c, 64d dienen beim
Zusammensetzen des Gewächshauses auch zur Befestigung
von Winkellaschen 68 oder ähnlichen Verbindungsprofilen,
die einerseits zur Verbindung aneinanderschließender
Enden von Profilstäben mit Schrauben und andererseits
zur Verankerung der unteren Enden der vertikalen Profilstäbe 55, 56 im Boden oder einem Fundament dienen.

Der als Eckprofil bzw. als Eckpfosten vorgesehene Profilstab 5e gemäß Fig. 17 besteht im wesentlichen aus
zwei Einzel-Profilstäben 69, einem Verbindungsstab 70
und Befestigungsschrauben 71. Die beiden, durch gleiche
Profile bzw. Abschnitte desselben Profiles gebildeten
Einzel-Profilstäbe 69, liegen in der Winkelhalbierenden
des von ihnen gebildeten, rechtwinkligen Winkelprofiles
mit Anschlußkanten 72 aneinander an, die durch schmale
Profilstegkanten gebildet sind. An den außenliegenden
Enden der durch sie gebildeten Winkelschenkel weist jeder Einzel-Profilstab 69 eine Schiebeführung 63e für das
Steckglied 25a der zugehörigen Wandungs-Platte 28a auf,
wobei die beiden in den Profilstab 5e eingreifenden Wandungs-Platten im rechten Winkel zueinander stehen. Zwischen der Anschlußkante 72 und der Schiebeführung 63e
weist jeder Einzel-Profilstab 69 ein Nutprofil 64e auf,
an dessen rechtwinklig C-förmigen Querschnitt der die
Schiebeführung 63e bildende, annähernd U-förmige Profilabschnitt so anschließt, daß sein U-Querschnitt teilweise durch einen Seitenschenkel des Nutprofiles 64e gebildet ist und dieser Profilabschnitt ausschließlich
über die Außenseite des Nutprofiles 64e vorsteht. Das
gleiche gilt auch für den die Anschlußkante 72 bildenden
Profilsteg, der in den Ebenen der einwärts abgewinkelten
Schenkelenden des Nutprofiles 64e liegt und eine nach
außen gerichtete Verlängerung des zugehörigen Schenkelendes bildet. Der Verbindungsstab 70 ist als Winkelprofil ausgebildet, dessen Schenkel die die Anschlußkanten
bildenden Profilstege sowie die Nutprofile 64e an den
Innenseiten abdecken und Durchgangslöcher für die Befestigungsschrauben 71 aufweisen. Die Köpfe 73 der Befestigungsschrauben 71 sind in die Nutprofile 64e eingesetzt und können durch Längsverschieben entlang dieser
Nutprofile auf die Durchgangsbohrungen in dem Verbindungsstab 70 ausgerichtet werden. Die Nutprofile aller
Profilstäbe sind gleich bzw. so ausgebildet, daß sie
Schrauben gleicher Größe bzw. mit gleich großen Köpfen
aufnehmen können. Auf die nach innen vorstehenden Enden
der Schrauben-Schäfte sind Schraubenmuttern aufgeschraubt, mit welchen die den Profilstab 5e bildenden
Einzelteile gegeneinander verspannt sind.

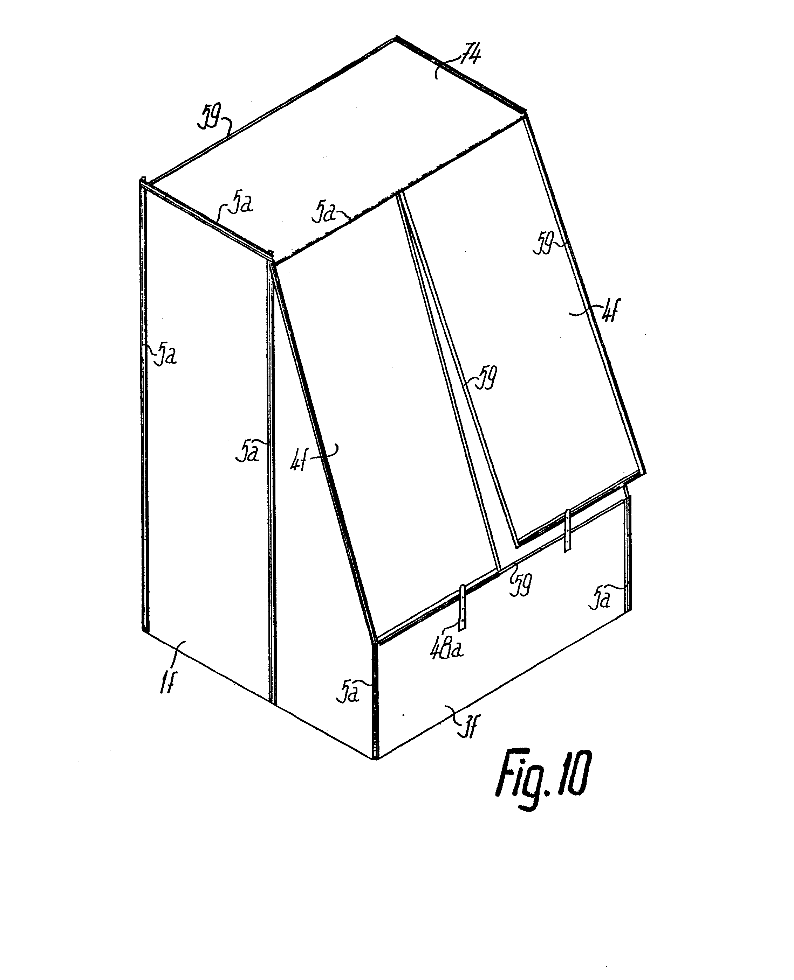

Das Gewächshaus gemäß Fig. 10 weist außer einer etwa
horizontalen, an seine Rückseite anschließenden und in
Draufsicht gegenüber seiner Vorderseite zurückversetzten
Deck-Wandung 74 mindestens eine, insbesondere zwei von
deren Vorderkante schräg nach unten abfallende Klapp-
Wandungen 4f auf, die in geschlossenem Zustand bis zur
Oberkante einer verhältnismäßig niedrigen, vertikalen
vorderen Außen-Wandung 3f reichen. An jeder Seite des
Gewächshauses sind als Pfosten zwei vertikale, über die
ganze Höhe des Gewächshauses reichende Profilstäbe 5a
vorgesehen, von denen der hintere im Bereich der Rückseite und der vordere im Bereich der Vorderseite der Deck-Wandung 74 liegt und die über eine obere Traverse
in Form eines horizontalen Profilstabes 5a miteinander
verbunden sind. Wie Fig. 20 zeigt, ist dieser obere Profilstab 5a auf die oberen Enden der vertikalen Profilstäbe 5a aufgelegt und mit in die Profilstäbe eingreifenden Befestigungsschrauben verschraubt. An jeder Seite
des Gewächshauses ist im Bereich von dessen Vorderseite
ein weiterer vertikaler Profilstab 5a vorgesehen, der
die vordere Wandung 3f seitlich aufnimmt und nur über
deren Höhe reicht. Die im Bereich der Vorderkante der
Deckwandung 74 liegenden Profilstäbe 5a weisen an den
voneinander abgekehrten Außenseiten ihrer oberen Enden
unmittelbar unterhalb des horizontalen Profilstabes 5a
jeweils eine Lagerwange 75 in Form eines horizontal nach
vorne vorstehenden Stabes auf, der mit einer Schraube in
der zugehörigen Schiebeführung 18a bzw. 19a des jeweiligen Profilstabes 5a befestigt ist. Zwischen den Lagerwangen 75 ist mindestens ein weiterer, zur Vorderkante
der Deck-Wandung 74 paralleler horizontaler Profilstab
5a angeordnet, durch dessen rohrförmigen Profilabschnitt
ein im Durchmesser dessen lichter Weite gleichender zylindrischer Lagerstab gesteckt ist, der mit seinen beiden vorstehenden Enden jeweils einen Lagerzapfen 76 für
den Eingriff in eine Lagerbohrung in der zugehörigen
Lagerwange 75 bildet. Auf dem Lagerstab ist zweckmäßig
eine der Anzahl der Klapp-Wandungen 4f entsprechende
Anzahl von hintereinandergereihten Profilstäben 5a angeordnet, so daß jede Klapp-Wandung 4f unabhängig von
allen übrigen Klapp-Wandungen mit ihrem Profilstab 5a
auf bzw. gegenüber dem Lagerstab geschwenkt werden kann.
Dadurch, daß die Klapp-Wandungen 4f in Schiebeführungen
18a der in der Gelenkachse liegenden Profilstäbe 5a eingreifen, können sie auch in Längsrichtung dieser Profilstäbe 5a bzw. der Schwenkachse verschoben werden, so daß statt oder zusätzlich zur Schwenkbewegung auch ein Verschieben der Klapp-Wandungen 4f derart möglich ist, daß
eine mehr oder weniger große Öffnung im Gewächshaus zur
Belüftung sowie als Türöffnung freigegeben wird. In ähnlicher Weise ist die Deck-Wandung 74 gemäß Fig. 20 in
seitlichen Schiebeführungen 19a der obersten horizontalen Profilstäbe 5a in deren Längsrichtung verschiebbar
geführt, so daß die Deck-Wandung 74, die in Schließlage
zweckmäßig als Abdeckung nach vorne über die Gelenk-Profilstäbe 5a ragend vorsteht, aus dieser Schließlage nach
vorne in eine Öffnungslage geschoben werden kann, in
welcher die Oberseite des Gewächshauses wenigstens teilweise geöffnet ist. Die die Seitenwände 1f bildenden
Wandungs-Platten werden zweckmäßig von oben in die
Schiebeführungen der die zugehörigen Pfosten bildenden
Profilstäbe 5a eingesetzt, so daß sich eine sehr einfache Montage ergibt; in ähnlicher Weise wird auch die
die vordere Wandung 3f bildende Platte von oben eingesetzt.

Die hintere Kante der Deck-Wandung 74 sowie beide Seitenkanten jeder Klapp-Wandung 4f und die obere Kante der
vorderen Wandung 3f sind jeweils mit einem Profilstab 59
gemäß Fig. 13 versehen, der einen dem Profilabschnitt
13a gemäß Fig. 12 gleichenden Profilabschnitt 13b zum
Aufstecken auf die zugehörige Randzone aufweist und dessen Profil-Quersteg über einen Profil-Schenkel seitlich
hinaus zu einem vorstehenden Profilsteg 77 verlängert
ist. Der Profil-Quersteg des Profilabschnittes 13b liegt
nicht wie bei der Ausführungsform nach Fig. 12 genau
rechtwinklig, sondern unter wenigen Winkelgraden von 90°
abweichend zu den Profil-Schenkeln, wobei der unter
gleichem Winkel in einer Ebene mit dem Profil-Quersteg
liegende Profilsteg 77 an der Seite des Profilabschnittes 13b vorgesehen ist, an welcher er mit der Außenseite
des zugehörigen Profil-Schenkels einen spitzen Winkel
einschließt. Der Profilstab 59 kann so angeordnet werden, daß der Profilsteg 77 entweder über die Außenseite
oder über die Innenseite der zugehörigen Wandung vorsteht. Zweckmäßig sind Profilstäbe 59 auch an den schräg
abfallenden oberen Kanten derjenigen Wandungs-Platten
der Seiten-Wandungen 1f vorgesehen, die an die vordere
Wandung 3f anschließen und auf denen die Klapp-Wandungen
4f bei Schließlage aufliegen.

Im Falle der vorderen Wandung 3f ist der Profilstab 59
mit nach außen vorstehendem Profilsteg 77 angeordnet,
derart, daß der Profilsteg 77 für den höhenverstellbaren
Eingriff der Stützen 48a gemäß Fig. 21 geeignet ist. Die
unteren Kanten der Klapp-Wandungen 4f sind jeweils mit
einem Profilstab 7a gemäß Fig. 12 versehen, dessen hakenförmiger Profilabschnitt 38a nach unten und außen
vorsteht. Auf diesen Profilabschnitt 38a ist die Stütze
48a mit einem Formschlußglied 49a derart gelenkig aufgesetzt, daß sie über einen ausreichenden Schwenkwinkel um
eine Längsachse des Profilstabes 7a gegenüber diesen
verschwenkt werden kann. Das Formschlußglied 49a ist als
Spreizmaul ausgebildet, in welchen der Endschenkel 39a
des Profilabschnittes 38a von unten eingreift. An ihrer
der vorderen Wandung 3f zugekehrten Längsseite weist die
Stütze 48a mehrere über ihre Höhe verteilte, nutförmige
Formschlußglieder 54a auf, die so an den Profilstegen 77
angepaßt sind, daß sie in aufgestecktem Zustand sicher
an diesem halten. Dadurch kann jede Klapp-Wandung 4f in
einer der Anzahl der Formschlußglieder 54a entsprechenden Anzahl von aufgeklappten Stellungen gesichert werden.

PATENTANWÄLTE **RUFF** UND **BEIER** STUTTGART

Dipl.-Chem. Dr. Ruff
Dipl.-Ing. J. Beier
Dipl.-Phys. Schöndorf

Neckarstraße 50
D-7000 Stuttgart 1
Tel.: (0711) 22705 1*
Telex 07-23412 erub d

0175203

−1−

A 22 171                    26. August 1985 JB/khe

Anmelderin:     Erich Schumm GmbH
                Erich-Schumm-Straße 2-4

                7157 Murrhardt/ Württ.


Frühbeet-Gehäuse

- - - - - -

A N S P R Ü C H E


1.  Frühbeet-Gehäuse mit über Eck aneinander schließenden Wandungen, gekennzeichnet durch für benachbarte
    Kasten-Wandungen vorgesehene Profilstäbe (5), welche
    an ihren Außenseiten jeweils mindestens zwei an unterschiedlichen Seiten in ihrer Längsrichtung liegende, hinterschnittene, nutartige Schiebeführungen
    (18, 19) für den formschlüssigen Eingriff von Schiebe-Steckgliedern (25) an den zugehörigen Randzonen
    von Wandungen (1 bis 3) aufweisen.

2.  Gehäuse, insbesondere nach Anspruch 1, dadurch gekennzeichnet, daß die Schiebeführung (18, 19) im
    Querschnitt im wesentlichen symmetrisch zu der zum
    Nutgrund (24) rechtwinkligen Mittelebene (20) ausgebildet ist, daß die Steckglieder (25) im Querschnitt
    nur an einer Seite (29) an das Formschlußprofil der Schiebeführung (18, 19) angepaßt sind und an der anderen Seite (31) vorzugsweise etwa parallel zur Mittelebene (20) liegend in die zugehörige Außenfläche (27) der Wandung (1 bis 3) übergehen und/oder daß das Steckglied (25) im wesentlichen vollständig zwischen den Ebenen der Außenflächen (26, 27) der, insbesondere durch eine vorzugsweise thermoplastische Hohlkammer-Platte gebildeten Wandung (1 bis 3) liegt und vorzugsweise durch eine plastische Einprägung an mindestens einer Außenfläche (26) des Wandungsrandes gebildet ist.

3. Gehäuse, insbesondere nach Anspruch 1 oder 2, dadurch gekennzeichnet, daß an dem Profilstab (5) drei oder mehr, vorzugsweise im rechten Winkel zueinander stehende Schiebeführungen (18, 19) vorgesehen sind, wobei vorzugsweise die, insbesondere schwalbenschwanzförmigen Schiebeführungen (18, 19) im Querschnitt durch Profilstege begrenzt, vorzugsweise durch einen annähernd H-förmigen oder rechteckig rohrförmigen Profilabschnitt mit jeweils zwei quer abstehenden Profilstegen (23) an den Außenseiten der H-Schenkel (21) bzw. der Rechteckseiten gebildet sind.

4. Gehäuse, insbesondere nach einem der Ansprüche 1 bis 5, dadurch gekennzeichnet, daß der als Pfosten angeordnete Profilstab (5) gegenüber der Wandungshöhe länger und vorzugsweise am unteren Ende (17) nach Art eines Bodenankers, Herings o.dgl. ausgebildet ist, wobei insbesondere der rohrförmige Profilabschnitt zur Aufnahme eines über seine Länge durchgehenden Befestigungsstabes ausgebildet ist.

5. Gehäuse, insbesondere nach einem der Ansprüche 1 bis 6, gekennzeichnet durch gelenkig, verschiebbar und/oder quer zur Gelenkachse (46, 47) voneinander lösbar ineinandergreifende Gelenkprofile, wie Halbscharnierprofil-Paare (7, 11; 8, 12) mit Befestigungsnuten einerseits für den oberen Rand (9, 10) einer Wandung (2, 3) und andererseits für den zugehörigen Rand (14) einer Klapp-Wandung (4), wobei die Gelenkabschnitte der Halbscharnierprofile (7, 11; 8, 12) vorzugsweise annähernd winkelförmig mit einem für den Gelenkeingriff vorgesehenen freien Winkelschenkel (38, 42; 40, 44) sind, der benachbart zur Winkelecke einwärts stumpfwinklig und an der freien Randzone (39, 43; 41, 45) einwärts etwa rechtwinklig abgewinkelt ist und wobei ferner vorzugsweise mindestens eine Stütze (48) mit Formschlußgliedern (49, 54) für den lösbaren Eingriff in die der Gelenkachse gegenüberliegende Randzone der Klapp-Wandung bzw. in die voneinander gelösten und abgehobenen Halbscharnierprofile (7, 11; 8, 12) eines Paares vorgesehen ist und mindestens eine Randzone bzw. ein Halbscharnierprofil (7, 8) höhenverstellbar in die Stütze (48) eingreift, derart, daß vorzugsweise die Stütze (48) am oberen Ende ein hakenförmiges Formschlußglied (49) mit einem darunter liegenden Auflageschenkel (51) für das zugehörige Halbscharnierprofil (11, 12) und darunter mindestens ein zur selben Seite wie das obere Formschlußglied (49) liegendes, weiteres Formschlußglied (54) aufweist, das mit einem nach unten gerichteten Standsteg (53) für die zugehörige Randzone bzw. das zugehörige Halbscharnierprofil (7, 8) versehen ist.

6. Gehäuse, insbesondere nach einem der Ansprüche 1 bis 5, dadurch gekennzeichnet, daß in der Gelenkachse mindestens einer gelenkig gelagerten Klapp-Wandung (4f) an dem zugehörigen Gelenk-Profilstab (5a) endseitige Lagerzapfen (76) vorgesehen sind, die in Lagerwangen (75) eingreifen, welche in Schiebeführungen (18a) von im Winkel zum Gelenk-Profilstab (5a) angeordneten Profilstäben (5a) befestigt sind (Fig. 19).

7. Gehäuse, insbesondere nach einem der Ansprüche 1 bis 6, dadurch gekennzeichnet, daß Profilstäbe (5a, 55, 56, 57, 58) hinterschnittene, insbesondere T-nutförmige Nutprofile (64) für die Aufnahme von Schraubenköpfen (73), vorzugsweise an ihren Innenseiten, aufweisen und daß insbesondere die Nutprofile (64) jeweils zwischen zwei Schiebeführungen (63; 63b, 65) liegen.

8. Gehäuse, insbesondere nach einem der Ansprüche 1 bis 7, dadurch gekennzeichnet, daß als Eckprofile bzw. als Eckpfosten vorgesehene Profilstäbe (5e) aus zwei, insbesondere auf Gehrung, mit Anschlußkanten (72) aneinanderschließenden Einzel-Profilstäben (69) zusammengesetzt sind, die vorzugsweise über einen in ihrer einspringenden Ecke liegenden, beispielsweise winkelförmigen und verschraubten Verbindungsstab (70) o.dgl. lösbar miteinander verbunden sind, wobei insbesondere jeder Einzel-Profilstab (69) zwischen seiner Schiebeführung (63e) und seiner Anschlußkante (72) ein hinterschnittenes Nutprofil (64c) für die verschiebbare formschlüssige Aufnahme von Schraubenköpfen (73) aufweist (Fig. 17).

9.  Gehäuse, insbesondere nach einem der Ansprüche 1 bis
    8, dadurch gekennzeichnet, daß mindestens ein Profilstab (56, 57) eine hinterschneidungsfrei in die
    zugehörige Wandungs-Randzone (25c) o.dgl. eingreifende, insbesondere im Querschnitt rechteckige
    Stecknut (65, 65c) aufweist und daß mindestens eine
    Stecknut (65) in einer gemeinsamen Ebene mit und/
    oder mindestens eine Stecknut (65c) im Winkel zu der
    Schiebeführung (63b, 63c) dieses Profilstabes (56,
    57) liegt.

10. Gehäuse, insbesondere nach einem der Ansprüche 1 bis
    9, dadurch gekennzeichnet, daß es als Gewächshaus
    o.dgl. ausgebildet ist, dessen Dach vorzugsweise
    mindestens eine aufstellbare Klapp-Wandung (4f) und/
    oder von dessen Wandungen mindestens eine, insbeson-
    dere eine Giebel-Wandung (1a), einen in benachbarten
    Profilstäben (56) geführten Rolladen (60) als Tür
    aufweist.


                        - - - - - - -

Fig.1

Fig.2

Fig.3

Fig. 4

Fig. 5

Fig. 8

Fig. 7

Fig. 6

Fig.9

*Fig. 10*

Fig. 11

Fig. 12

Fig. 13

Fig. 14

Fig. 15

Fig. 16

Fig. 18

Fig. 21

Fig. 17

Fig. 20

Fig. 19

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-2 532 633 (GERRESHEIMER GLAS) <br> * Ansprüche 1,2; Spalte 4, Zeilen 8-24; Abbildungen 1-3 * | 1,2 | A 01 G 9/16 <br> A 01 G 9/20 |
| | --- | | |
| X | DE-A-3 224 711 (SCHOLTA) <br><br> * Ansprüche 1,2,5,8; Seite 5, Zeile 3 - Seite 6, Zeile 33; Abbildungen 1-7 * | 1,3,7-9 | |
| Y | | 4,6 | |
| | --- | | |
| Y | DE-B-1 303 824 (ENDER) <br> * Ansprüche 1-3,6-8; Spalte 3, Zeile 34 - Spalte 4, Zeile 43; Spalte 5, Zeilen 10-42; Spalte 6, Zeilen 32-52; Abbildungen 1-6,10-12 * | 4,6 | |
| | | | RECHERCHIERTE SACHGEBIETE (Int. Cl.4) |
| A | | 5 | A 01 G <br> E 04 B |
| | --- | | |
| X | DE-U-8 415 858 (MAIER BIHLMAIER & CO.) <br> * Abbildungen 1,2; Ansprüche 1,2,6,8-10; Seite 6, Zeile 25 - Seite 7, Zeile 5 * | 1,2 | |
| | --- | | |
| A | DE-A-2 611 835 (HANSSON) <br> * Abbildungen 2-5; Ansprüche 7,9 * | 5 | |
| | ---     -/- | | |

Der vorliegende Recherchenbericht wurde für alle Patentansprüche erstellt.

| Recherchenort <br> DEN HAAG | Abschlußdatum der Recherche <br> 13-12-1985 | Prüfer <br> MEINDERS H. |
|---|---|---|

**Europäisches Patentamt**

**EUROPÄISCHER RECHERCHENBERICHT**

0175203
Nummer der Anmeldung

EP 85 11 1075

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,P | EP-A-0 149 443 (WÜSTER) * Abbildungen 1,2,5,8; Ansprüche 1,3; Seite 5, Zeile 1 * | 5 | |
| A | DE-A-2 520 304 (ENGEL) * Seite 10, Zeilen 16-23; Anspruch 9; Abbildungen 1,4 * | 10 | |
| | | | **RECHERCHIERTE SACHGEBIETE (Int. Cl.4)** |

Der vorliegende Recherchenbericht wurde für alle Patentansprüche erstellt.

| Recherchenort DEN HAAG | Abschlußdatum der Recherche 13-12-1985 | Prüfer MEINDERS H. |
|---|---|---|